# EUROPEAN PATENT SPECIFICATION

(11) **EP 3 702 206 B1**
(45) Date of publication and mention of the grant of the patent: **22.03.2023**
(21) Application number: 18870085.0
(22) Date of filing: 19.10.2018
(51) Int. Cl.: B60N 2/28, B60N 2/22, B60N 2/26, B60N 2/02, B60N 2/90, B60N 2/30

(54) **VEHICLE-MOUNTED DUAL-MODE INTEGRATED SEAT, CHILD SAFETY SEAT, SWITCHING SYSTEM, AND VEHICLE**
FAHRZEUGMONTIERTER INTEGRIERTER DOPPELMODUSSITZ, KINDERSITZ, WECHSELSYSTEM UND FAHRZEUG
SIÈGE INTÉGRÉ À DOUBLE MODE MONTÉ SUR VÉHICULE, SIÈGE DE SÉCURITÉ ENFANT, SYSTÈME DE COMMUTATION, ET VÉHICULE

(30) Priority: 23.10.2017 CN 201710991409
(43) Date of publication of application: 02.09.2020
(73) Proprietor: NIO (Anhui) Holding Co., Ltd., Hefei City, Anhui Province (CN)
(72) Inventor: CHEN, Liang, Anting, Jiading, Shanghai (HK)
(74) Representative: Vossius & Partner Patentanwälte Rechtsanwälte mbB
(86) International application number: PCT/CN2018/110920
(87) International publication number: WO 2019/080770

(56) References cited:
- WO-A1-92/12024
- WO-A1-96/38317
- CN-A- 101 850 734
- CN-A- 103 407 386
- CN-A- 106 183 909
- CN-U- 204 821 580
- CN-U- 207 657 647
- JP-A- 2004 106 785

## Description

### FIELD OF THE INVENTION

The disclosure relates to the field of automobiles, and particularly to a dual-mode on-vehicle integrated seat, a child safety seat, a rotary switching system for the dual-mode on-vehicle integrated seat, and a vehicle.

### BACKGROUND OF THE INVENTION

As automobiles are widely used in people's daily work and life, the safety of automobiles has increasingly become a top concern. However, the safety design of automobile seats has always been subjected to flaws and shortcomings, which have not yet been effectively overcome. For example, for a split-type on-vehicle child seat product, due to the large space occupied and high safety and reliability requirements, as well as the fact that the reliability of installation operation is not easy to be ensured, even if people have purchased a high-end reliable safety seat product, a normal use thereof still cannot be guaranteed. In addition, due to the bulky characteristic of such child seat product, it will occupy the on-vehicle space which is limited in itself during use and storage, which usually results in a significant reduction of the volume of the trunk of the vehicle, thereby posing restrictions on people's purchases and requirements on regular use of such safety seats. In addition, due to the existing different laws and regulations in various countries or regions regarding child restraint systems of vehicles, the market is uneven with various good and bad products; in particular, the product quality requirements on child protection in the automobile family era cannot be met. Therefore, it is very necessary to study and improve on the existing problems or deficiencies including the above situation.

CN 106 183 909 A relates to a bilateral rotation integrated child safety seat. The bilateral rotation integrated child safety seat mainly comprises a folding type child safety seat body, an adult seat backrest, a rotation locking device, a lifting device, a first fixing device, an electric angle adjuster, an electric sliding rail device and an adult seat cushion, wherein the folding type child safety seat body can be folded and unfolded, is fixed to the lifting device in the adult seat backrest, and is folded and placed in a truck when not in use. The adult seat backrest is divided into a rotary backrest part and a matrix backrest part. The matrix backrest part is connected with the electric sliding rail device through the electric angle adjuster. The rotary backrest part can drive the folding type child safety seat body to rotate by 180 degrees. The lifting device can drive the folding type child safety seat body to ascend and descend vertically. The bilateral rotation integrated child safety seat integrates the backward sitting mode and the forward sitting mode, can be selectively restrained by a five-point safety belt or a three-point safety belt, and is suitable for children of nine months to twelve years old, and the sitting inclination angle, vertical height and horizontal position can all be adjusted for children. WO96/38317 shows a dual-mode on vehicle integrated seat with a rotary switching system.

### SUMMARY OF THE INVENTION

The invention for which protection is sought is defined by the independent claims. The dependent claims concern particular embodiments.

In view of the above, the disclosure provides a dual-mode on-vehicle integrated seat, a child safety seat, a rotary switching system for the dual-mode on-vehicle integrated seat, and a vehicle, thereby effectively solving the above-mentioned problem(s) and other problem(s) existing in the prior art.

Firstly, according to a first aspect of the disclosure, a dual-mode on-vehicle integrated seat is provided, which includes:
a seat portion configured to be adapted to be installed inside a vehicle; and
a backrest portion having a first backrest part and a second backrest part that are opposite to each other, and configured to be rotatable about a longitudinal axis thereof to provide a first sitting mode and a second sitting mode respectively, wherein in the first sitting mode, the backrest portion is rotated so that the first backrest part is exposed to form, together with the seat portion, a seat for adults to sit on, and in the second sitting mode, the backrest portion is rotated so that the second backrest part is exposed to form, by itself or together with the seat portion, a seat for children to sit on.

In the dual-mode on-vehicle integrated seat according to the disclosure, optionally, the second backrest part includes:
a fixed part fixedly installed to the backrest portion; and
a folded part, one end of which is connected to one end of the fixed part and cooperates with the fixed part to provide a first configuration and a second configuration, wherein in the first configuration, the folded part is engaged with the fixed part to form a folded state, and in the second configuration, the folded part is disengaged from the fixed part to form an unfolded state to provide the second sitting mode.

In the dual-mode on-vehicle integrated seat according to the disclosure, optionally, the second backrest part further includes:
an angle adjusting part configured to adjust an included angle between the fixed part and the folded part and maintain it at a set angle to adapt to sitting or sleeping posture requirements of different children;
a headrest part installed on the fixed part and configured to be adjustable in height to adapt to headrest position requirements of different children;
a cover part installed on the fixed part and configured to be adjustable in height to adapt to overhead position requirements for protecting different children; and/or
a three-point seat belt having a first end and a second end fixed on both sides of the fixed part respectively and a third end fixed on the folded part, so as to restrain child in the dual-mode on-vehicle integrated seat in the second sitting mode.

In the dual-mode on-vehicle integrated seat according to the disclosure, optionally, the included angle ranges from 0° to 170°.

In the dual-mode on-vehicle integrated seat according to the disclosure, optionally, an inner side of the fixed part and/or an inner side of the folded part is provided with a buffer part, which is configured to at least partially wrap and support the body parts of child in the dual-mode on-vehicle integrated seat in the second sitting mode.

In the dual-mode on-vehicle integrated seat according to the disclosure, optionally, in the first configuration, an overall thickness of the folded part and the fixed part is substantially 1/3 of an overall thickness of the backrest portion.

In the dual-mode on-vehicle integrated seat according to the disclosure, optionally, the backrest portion is configured to be adapted to be installed at the rearmost row of seats inside the vehicle such that: at least a portion of the second backrest part that is not exposed in the first sitting mode, or at least a portion of the first backrest part that is not exposed in the second sitting mode, is housed in a trunk of the vehicle.

In the dual-mode on-vehicle integrated seat according to the disclosure, optionally, the dual-mode on-vehicle integrated seat further comprises a rotary switching system comprising:
a positioning device configured to position and install the backrest portion along the longitudinal axis thereof in the dual-mode on-vehicle integrated seat; and
a rotating fork arm device, which at least includes a first fork arm and a second fork arm that are disposed on the backrest portion, and which is configured to fix the backrest portion in place after the backrest portion is rotated into position to provide the first sitting mode or the second sitting mode.

Secondly, according to a second aspect of the disclosure, a child safety seat is further provided, which is configured as part of any of the above-described dual-mode on-vehicle integrated seats to provide the second sitting mode.

Furthermore, according to a third aspect of the disclosure, a rotary switching system for any of the above-described dual-mode on-vehicle integrated seats is further provided, which is configured to enable the backrest portion in the dual-mode on-vehicle integrated seat to rotate about the longitudinal axis thereof and maintain the dual-mode on-vehicle integrated seat in the first sitting mode or the second sitting mode.

In the rotary switching system for the dual-mode on-vehicle integrated seat according to the disclosure, optionally, the rotary switching system comprises:
a positioning device configured to position and install the backrest portion along the longitudinal axis thereof in the dual-mode on-vehicle integrated seat; and
a rotating fork arm device, which at least includes a first fork arm and a second fork arm that are disposed on the backrest portion, and which is configured to fix the backrest portion in place after the backrest portion is rotated into position to provide the first sitting mode or the second sitting mode.

In addition, according to a fourth aspect of the disclosure, a vehicle is further provided, which is equipped with any of the above-described dual-mode on-vehicle integrated seats.

By adopting an innovative structural design concept, the disclosure provides a dual-mode on-vehicle integrated seat that has many obvious advantages over the prior art. It not only has a simplified and compact structure, but also can greatly improve the utilization of existing on-vehicle space. The installation, arrangement and daily use are very flexible and convenient, and the disclosure can switch between two sitting modes for adults and children very quickly and efficiently. Moreover, a variety of safety protection and comfort means can be provided especially in the child sitting mode, which significantly enhances the safety and reliability of using on-vehicle seat to ensure the safety of children sitting in the vehicle, and effectively solves the technical problems such as complex installation, difficulty in guaranteeing reliability, and large space occupied that are common in such existing seat products, which have exist over a long period in the industry and have not been successfully overcome. The application of the disclosure can significantly improve the comfort, integration degree and safety of the vehicle, so that the actual requirements of people are better met.

### BRIEF DESCRIPTION OF THE DRAWINGS

The technical solutions of the disclosure will be further described in detail below with reference to the accompanying drawings and embodiments. However, it should be understood that these drawings are designed merely for the purpose of explanation, and therefore should not be construed as limiting the scope of the disclosure. In addition, unless specifically indicated otherwise, these drawings are only intended to conceptually illustrate the structural configurations described herein, and are not required to be drawn to scale.
FIG. 1 is a schematic front view showing the structure of an embodiment of a dual-mode on-vehicle integrated seat according to the disclosure in a first sitting mode.
FIG. 2 is a schematic rear view showing the structure of the embodiment of the dual-mode on-vehicle integrated seat in the first sitting mode.
FIG. 3 is a schematic partial view showing the structure of the embodiment of the dual-mode on-vehicle integrated seat during a rotary switching operation from the first sitting mode to a second sitting mode.
FIG. 4 is a schematic front view showing the structure of the embodiment of the dual-mode on-vehicle integrated seat having been rotated and switched to the second sitting mode.
FIG. 5 is a schematic rear view showing the structure of the embodiment of the dual-mode on-vehicle integrated seat after the seat has been rotated and switched to the second sitting mode and when a second backrest part is in a first configuration.
FIG. 6 is a schematic front view showing the structure of the embodiment of the dual-mode on-vehicle integrated seat after the seat has been rotated and switched to the second sitting mode and when the second backrest part is in a second configuration.
FIG. 7 is a schematic front view showing the structure of the seat when a child sits on the seat in the second configuration illustrated in FIG. 6.
FIG. 8 is a schematic partial view showing height adjustment of a headrest part and a cover part of the embodiment of the dual-mode on-vehicle integrated seat to adapt to children with different heights.

### DETAILED DESCRIPTION OF THE EMBODIMENT(S) OF THE INVENTION

First of all, it should be noted that the specific structures, components, characteristics, advantages and the like of the dual-mode on-vehicle integrated seat, child safety seat, rotary switching system for the dual-mode on-vehicle integrated seat and the vehicle will be described specifically by way of example. However, all the descriptions are for illustrative purposes only, and should not be construed as limiting the disclosure in any way. In addition, unless otherwise specified herein, the various parts, components, features, or devices involved in the technical solutions of the disclosure are allowed to be arbitrarily re-combined to form more embodiments that may not be explicitly described herein. In addition, for the sake of simplifying the drawings, the same or similar parts and features may be marked at only one place or several places in the same drawing.

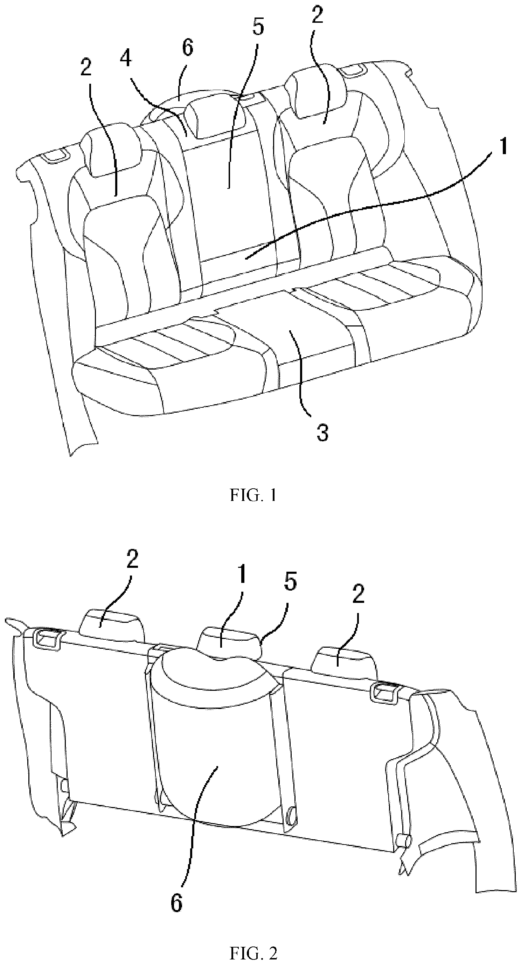

Refer is made to FIG. 1 to FIG. 8, in which the main components of an embodiment of the dual-mode on-vehicle integrated seat according to the disclosure and situations in different working modes or configurations thereof are shown schematically only, and detailed descriptions will be given below for them.

As illustrated in FIGS. 1 and 2, in the given embodiment, a dual-mode on-vehicle integrated seat 1 is installed inside a vehicle in a centered arrangement by being integrated with two common on-vehicle seats. For example, these seats may be preferably arranged as the rearmost row of seats inside the vehicle so that they can be adjacent to and make full use of the space of a trunk of the vehicle, which will be described later.

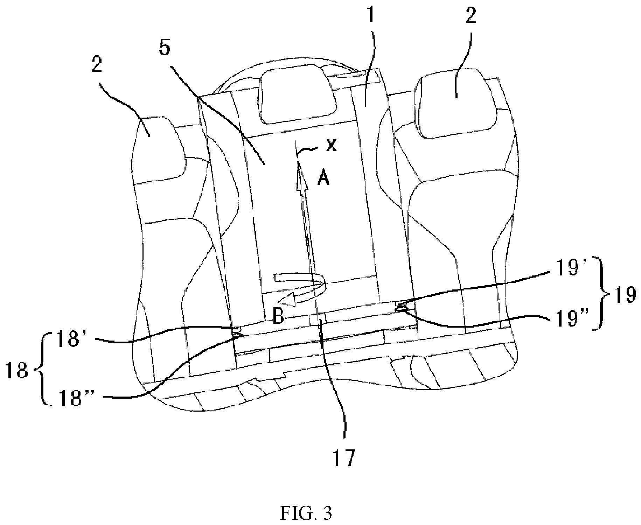

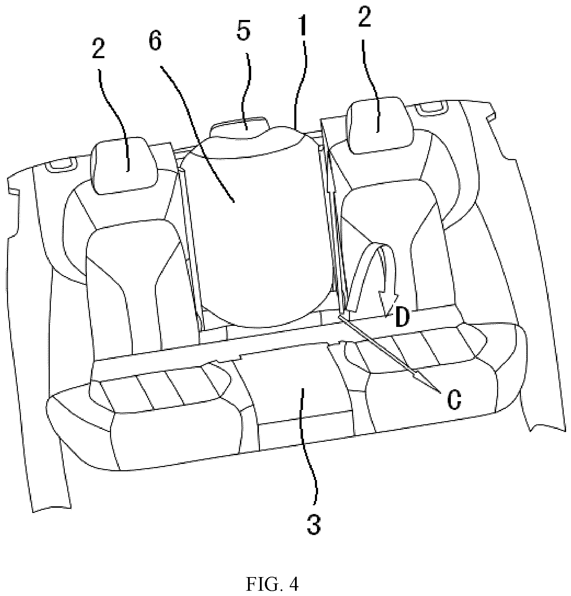

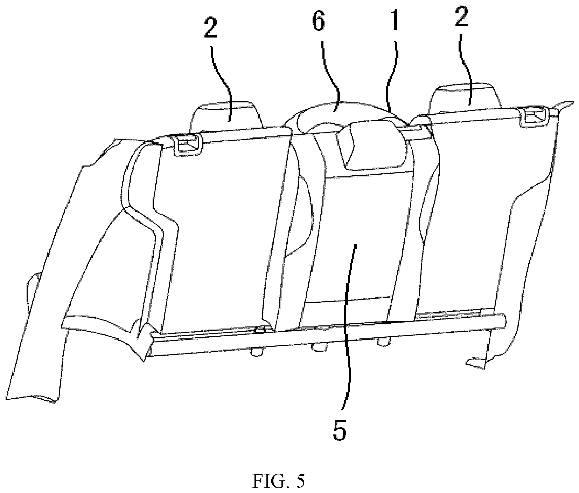

The dual-mode on-vehicle integrated seat 1 includes a seat portion 3 and a backrest portion 4, wherein the seat portion 3 is adapted to be installed inside the vehicle for an occupant to sit on, while the backrest portion 4 is provided with two backrest parts, namely, a first backrest part 5 and a second backrest part 6, which are arranged opposite to each other. In the disclosure, the above-mentioned backrest portion 4 is innovatively constructed to be omni-directionally rotatable about a longitudinal axis X thereof (FIG. 3) by 360° to the maximum. In this way, two completely different sitting modes can be selected and switched according to actual requirements, namely, a first sitting mode (as illustrated in FIGS. 1 and 2) for adults to sit on the seat, and a second sitting mode (as illustrated in FIGS. 4 and 5) for children to sit on the seat. It should be pointed out herein that the term "child/children" in this context should have a broad meaning, for which the conditions such as individual growth and development delay needs to fully considered, and it should not be simply understood as being restricted by a specific range of age.

Specifically, in this embodiment, FIGS. 1 and 2 schematically illustrate a front-side structure and a rear-side structure respectively when the dual-mode on-vehicle integrated seat 1 is in the first sitting mode. In this situation, the backrest portion 4 of the dual-mode on-vehicle integrated seat 1 has been rotated to expose its first backrest part 5, so that the first backrest part 5 and the seat portion 3 together constitute a seat for an adult to sit on, i.e., a standard seat normally configured in the vehicle. At this point, the seat conforms to the standard of normal sitting posture of an ordinary adult. The seat, together with the other conventional seats 2, can meet the daily sitting demands of passengers such as ordinary adults. It can be understood that in the first sitting mode, the second backrest part 6 opposite to the first backrest part 5 in the disclosure is actually intentionally placed in an unexposed state, that is, the second backrest part 6 is now located in the space where the back sides of the these seats are located. Such a space may be part of the trunk of the vehicle, that is, the second backrest part 6 may be partially or completely accommodated in the trunk of the vehicle. In this way, the utilization of the interior space and the trunk space of the vehicle can be significantly improved.

FIGS. 4 and 5 schematically illustrate a front-side structure and a rear-side structure respectively when the dual-mode on-vehicle integrated seat 1 is in second first sitting mode. In this second sitting mode, the backrest portion 4 has been rotated to expose the second backrest part 6 of the backrest portion 4, thereby providing a seat for children to sit on. Although in this embodiment, the second backrest part 6 is configured to provide a child seat through its own configuration, it should be pointed out that forming a child seat through the second backrest part 6 and the seat portion 3 together is also absolutely allowed in other embodiments of the disclosure that are not illustrated. Of course, in the second sitting mode, the other common seats 2 located on both sides of the dual-mode on-vehicle integrated seat 1 can still be used by passengers such as ordinary adults for normal sitting. In addition, it can be understood that in the second sitting mode, since the first backrest part 5 and the second backrest part 6 of the backrest portion 4 are arranged opposite to each other, the first backrest part 5 is now switched to the unexposed state. In other words, the first backrest part 5 is now located in the space where the back sides of these seats are located as described above, thereby also greatly improving the utilization of the interior space and/or the trunk space of the vehicle.

In the disclosure, the rotary switching operation between the first sitting mode and the second sitting mode of the dual-mode on-vehicle integrated seat 1 can be accomplished by any suitable means such as manual, automatic, or semi-automatic devices. As an example, FIG. 3 only schematically illustrates that the rotary switching system optionally provided in the embodiment of the dual-mode on-vehicle integrated seat is used to implement the rotary switching operation from the above-mentioned first sitting mode to the second sitting mode (or vice versa).

As illustrated in FIG. 3, such a rotary switching system may include a positioning device 17 and a rotating fork arm device having a first fork arm 18 and a second fork arm 19. The positioning device 17 is configured to enable the backrest portion 4 of the dual-mode on-vehicle integrated seat 1 to be positioned and installed in the dual-mode on-vehicle integrated seat 1 along its longitudinal axis X, and in a preferred situation, the positioning device 17 is symmetrically and centrally arranged with respect to the longitudinal direction of the backrest portion 4 to facilitate the rotary switching operation. However, in some embodiments, the disclosure also allows the above-mentioned positioning device not to be centrally arranged, but to deviate from the central longitudinal axis of the backrest portion 4 in order to meet practical application requirements in certain specific situations.

For the rotating fork arm device, the first fork arm 18 and the second fork arm 19 thereof are both arranged on the backrest portion 4, so that after the backrest portion 4 is rotated into position, the relative position between the backrest portion 4 and the seat portion 3 can be fixed so as to thereby provide the above-mentioned first sitting mode or second sitting mode. According to the actual application situation, it is possible to provide three or more fork arms in the above-mentioned rotating fork arm device. Moreover, the specific arrangement positions, materials, shapes, configurations and the like of the fork arms in the rotating fork arm device may be flexibly selected and adjusted according to the actual situation. In addition, as an example, as illustrated in FIG. 3, one or more fork arms of the rotating fork arm device may be configured to have upper fork arms 18', 19' and lower fork arms 18", 19" that are removably assembled so that as shown by arrow A in FIG. 3, the backrest portion 4 is first lifted in the longitudinal direction to disengage the upper fork arm 18', 19' from the lower fork arms 18", 19" respectively, so the backrest portion 4 moves away from its original fixed position; then, the backrest portion 4 is rotated into position as shown by arrow B in FIG. 3, and then at this new position for sitting, the upper fork arm 18' is engaged with the lower fork arm 19", and the upper fork arm 19' is engaged with the lower fork arm 18", so as to limit the relative displacement between the backrest portion 4 and the seat portion 3. In this way, it can be simply and effectively ensured that the dual-mode on-vehicle integrated seat 1 can be placed in the first sitting mode or the second sitting mode as desired.

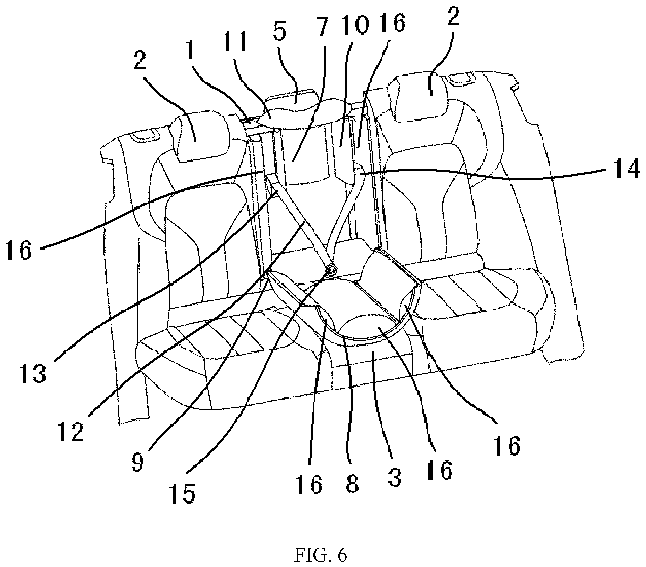

The configurations and components of the second backrest part of the dual-mode on-vehicle integrated seat according to the disclosure will be exemplarily described with reference to FIG. 6 to FIG. 8.

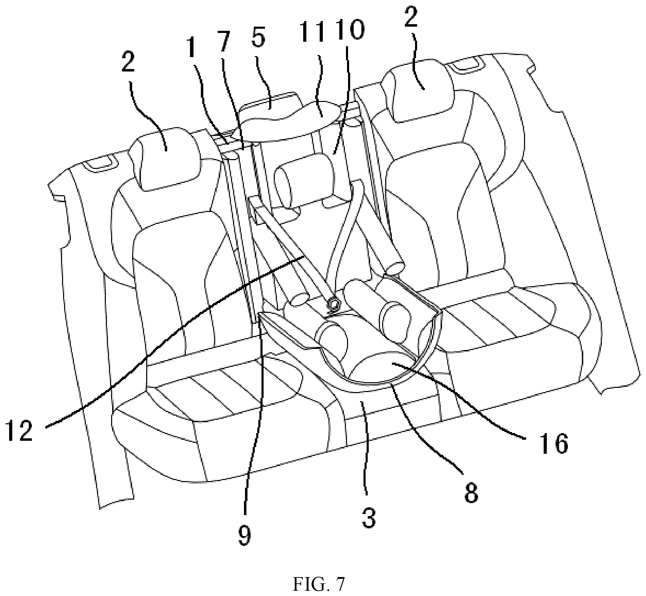

In the given embodiment, the second backrest part 6 includes a fixed part 7 and a folded part 8. The fixed part 7 may be directly fixed to the backrest portion 4, and one end of the folded part 8 and one end of the fixed part 7 are connected together so that they cooperate with each other to enable the second backrest part 6 to have different configurations. For example, at least a first configuration and a second configuration can be provided. In the first configuration, the folded part 8 is engaged with the fixed part 7 so that the second backrest part 6 forms a folded state as illustrated in FIG. 2 and FIG. 4. Optionally, the total thickness of the fixed part 7 and the folded part 8 in the first configuration may be approximately 1/3 of the total thickness of the backrest portion 4, that is, substantially equivalent to the thickness of one and a half independent seats, thereby occupying a very limited space, and bringing about a space-saving effect and degree to which any existing ordinary child restraint system or similar device is comparable. In the second configuration, the folded part 8 is disengaged from the fixed part 7 so that the second backrest part 6 is in the unfolded state as illustrated in FIGS. 6 and 7, that is, the aforementioned second sitting mode for children to sit on the seat is realized.

Additionally, in an optional situation, one or more of the following components or devices may also be arbitrarily selected and arranged on the second backrest part 6, although it is best to configure all of them considering the safety, comfort and the like when the children are sitting on the seat.

For instance, an angle adjusting part 9 may be provided so that an included angle between the fixed part 7 and the folded part 8 can be selectively adjusted as shown by arrows C and D in FIG. 4, and the included angle may be maintained at a desired set angle during the use of the seat so as to adapt to sitting or sleeping posture requirements of different children. Optionally, such an included angle may be in a range from 0° to 170°, so that the included angle may be appropriately adjusted for example between 90° and 170° according to different children's conditions to ensure their various use requirements on rest and sleeping posture, thereby greatly meeting the requirements on child seat space, which is simply unachievable in most existing big child seats in the prior art; or, for example, when the included angle is between 0° and 45°, the second backrest part 6 is in the first configuration in the folded state, so that its occupied space can be greatly saved when there is no child using the seat. It can be understood that the above-mentioned angle adjusting part 9 can be configured based on any suitable method such as manual, automatic, or semi-automatic ways.

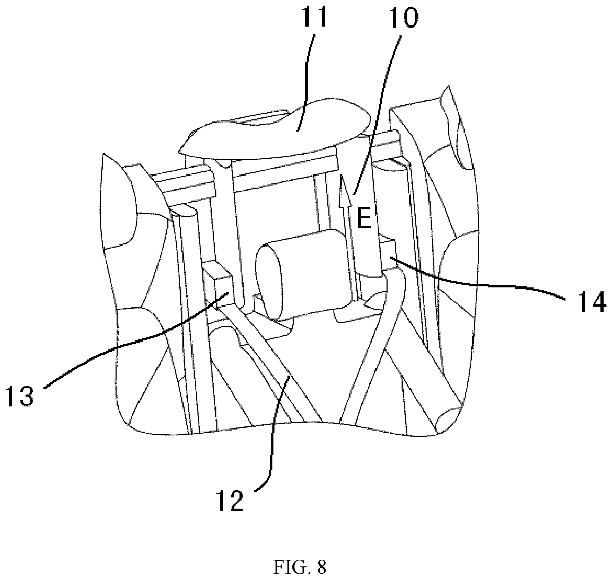

For example, a headrest part 10 may be installed on the fixed part 7 of the second backrest part 6, so that an adaptive height adjustment is enabled according to headrest position requirements of different children, which will not only protect children more safely and reliably, but also will make them more comfortable and healthy while sitting on the seat. As compared with the position illustrated in FIG. 7, FIG. 8 schematically illustrates that the position of the headrest part 10 has been selectively raised in height along the direction of arrow E in the figure. It can be understood that the headrest part 10 is also allowed to be configured based on any suitable method such as manual, automatic, or semi-automatic ways.

As another example, a cover part 11 can be installed on the fixed part 7 of the second backrest part 6, and the height of the cover part 11 can be adjusted to meet overhead position requirements for protecting different children, thereby providing more safety protection functions. As illustrated in FIG. 8, this figure also shows that the position of the cover part 11 has been selectively raised in height along the direction of arrow E in the figure. Similarly, the cover part 11 can be configured by any possible means such as manual, automatic or semi-automatic ways.

As another example, a three-point seat belt 12 may be configured, wherein a first end 13 and a second end 14 thereof are respectively fixed on both sides of the fixed part 7, and a third end 15 thereof is fixed on the folded part 8. Therefore, in the second sitting mode, the child can be restrained in the dual-mode on-vehicle integrated seat 1 very safely and reliably. In practical applications, the safety guarantee performance provided by the above integrated three-point safety belt 12 is also unachievable in the existing ordinary integrated safety seat systems for big child.

In addition, it should also be noted that as illustrated in FIG. 6 and FIG. 7, in the disclosure, providing a buffer part 16 on an inner side of the fixed part 7 and/or an inner side of the folded part 8 may also be preferentially considered, so that the body parts of the child sitting in the dual-mode on-vehicle integrated seat 1 can be partially or entirely as a whole wrapped and supported to provide an optimized safe sitting guarantee. Such body parts include but are not limited to the child's head, shoulders, arms, legs, etc.

According to a further technical solution of the disclosure, an innovative child safety seat is also provided. Such a child safety seat is configured as a part of the dual-mode on-vehicle integrated seat designed by the disclosure, so as to provide a second sitting mode that can be used by children. As a result, many disadvantages and problems such as cumbersome installation, large space occupied, and inability to guarantee use reliability of the child safety seats, child safety restraint systems or similar devices in the prior art can be very significantly overcome, and in particular, the on-vehicle use space can be greatly saved, and the comfort, integration degree and safety of taking the child seat can be improved.

According to another further technical solution of the disclosure, a rotary switching system for an dual-mode on-vehicle integrated seat designed by the disclosure is also provided. The switching system is configured to enable the backrest portion 4 in the dual-mode on-vehicle integrated seat to rotate about the longitudinal axis X thereof and maintain the dual-mode on-vehicle integrated seat in the first sitting mode or the second sitting mode as described above. For such a rotary switching system, since a very detailed exemplary description has been given above, reference may be made to these aforementioned contents, and no repeated description will be given herein.

According to yet another further technical solution of the disclosure, a vehicle is provided, which is equipped with one or more dual-mode on-vehicle integrated seats designed by the disclosure at any suitable positions on the vehicle, so that the numerous features and advantages of the disclosure as described above that are obviously superior to the prior art can be fully exploited, and the comfort, integration degree and safety of the vehicle can be significantly improved, so that various occupants of vehicles, especially children, can be better protected.

The dual-mode on-vehicle integrated seat, the child safety seat, the rotary switching system for the dual-mode on-vehicle integrated seat and the vehicle according to the disclosure have been elaborated above in detail by way of example only. These examples are merely used to illustrate the principles and embodiments of the disclosure, rather than limiting the disclosure. Various modifications and improvements can be made by those skilled in the art if not thereby departing from the scope of the claims. For example, the above mentioned seat portion, backrest portion, fixed part, folded part and the like in the dual-mode on-vehicle integrated seat can be made fully or partially of any suitable material such as plastic, metal, or hybrid materials. As another example, although in the example given, the folded part is shown to have a circular arc-shaped profile, it is completely possible for the disclosure to construct it into any suitable shape. As another example, the disclosure also allows the second sitting mode to be provided directly by the second backrest part and a seat portion that can be switched to be adapted for the child to sit on, so that the second backrest part need not be configured to have a fixed part and a folded part. Additionally, the engagement mentioned in various places herein can be implemented by mechanical means, physical means (including magnetic force) or other suitable means and any combination thereof. Therefore, all equivalent technical solutions should fall within the scope of the disclosure and be defined by the claims of the disclosure.

## Claims

1. A dual-mode on-vehicle integrated seat (1), comprising:
a seat portion (3) configured to be adapted to be installed inside a vehicle; and
a backrest portion (4) having a first backrest part (5) and a second backrest part (6) that are opposite to each other, and configured to be rotatable about a longitudinal axis (X) thereof to provide a first sitting mode and a second sitting mode respectively, wherein in the first sitting mode, the backrest portion (4) is rotated so that the first backrest part (5) is exposed to form, together with the seat portion (3), a seat for adults to sit on, and in the second sitting mode, the backrest portion (4) is rotated so that the second backrest part (6) is exposed to form, by itself or together with the seat portion (3), a seat for children to sit on;
wherein the dual-mode on-vehicle integrated seat (1) further comprises a rotary switching system comprising:
a positioning device (17) configured to position and install the backrest portion (4) along the longitudinal axis (X) thereof in the dual-mode on-vehicle integrated seat (1); and
a rotating fork arm device comprising at least a first fork arm (18) and a second fork arm (19) that are disposed on the backrest portion (4), and configured to fix the backrest portion (4) in place after the backrest portion (4) is rotated into position to provide the first sitting mode or the second sitting mode.

2. The dual-mode on-vehicle integrated seat (1) according to claim 1, wherein the second backrest part (6) comprises:
a fixed part (7) fixedly installed to the backrest portion (4); and
a folded part (8), one end of which is connected to one end of the fixed part (7) and cooperates with the fixed part (7) to provide a first configuration and a second configuration, wherein in the first configuration, the folded part (8) is engaged with the fixed part (7) to form a folded state, and in the second configuration, the folded part (8) is disengaged from the fixed part (7) to form an unfolded state to provide the second sitting mode.

3. The dual-mode on-vehicle integrated seat (1) according to claim 2, wherein the second backrest part (6) further comprises:
an angle adjusting part configured to adjust an included angle between the fixed part (7) and the folded part (8) and maintain it at a set angle to adapt to sitting or sleeping posture requirements of different children;
a headrest part (10) installed on the fixed part (7) and configured to be adjustable in height to adapt to headrest position requirements of different children;
a cover part (11) installed on the fixed part (7) and configured to be adjustable in height to adapt to overhead position requirements for protecting different children; and/or
a three-point seat belt (12) having a first end (13) and a second end (14) fixed on both sides of the fixed part (7) respectively and a third end (15) fixed on the folded part (8), so as to restrain child in the dual-mode on-vehicle integrated seat (1) in the second sitting mode.

4. The dual-mode on-vehicle integrated seat (1) according to claim 3, wherein the included angle ranges from 0° to 170°.

5. The dual-mode on-vehicle integrated seat (1) according to claim 2, wherein an inner side of the fixed part (7) and/or an inner side of the folded part (8) is provided with a buffer part (16), which is configured to at least partially wrap and support the body parts of child in the dual-mode on-vehicle integrated seat (1) in the second sitting mode.

6. The dual-mode on-vehicle integrated seat (1) according to claim 2, wherein an overall thickness of the folded part (8) and the fixed part (7) is substantially 1/3 of an overall thickness of the backrest portion (4).

7. The dual-mode on-vehicle integrated seat (1) according to claim 1, wherein the backrest portion (4) is configured to be adapted to be installed at the rearmost row of seats inside the vehicle such that: at least a portion of the second backrest part (6) that is not exposed in the first sitting mode, or at least a portion of the first backrest part (5) that is not exposed in the second sitting mode, is housed in a trunk of the vehicle.

8. A rotary switching system for the dual-mode on-vehicle integrated seat (1) according to any one of claims 1 to 7, **characterized by** being configured to enable the backrest portion (4) in the dual-mode on-vehicle integrated seat (1) to rotate about the longitudinal axis (X) thereof and maintain the dual-mode on-vehicle integrated seat (1) in the first sitting mode or the second sitting mode, said rotary switching system comprising: a positioning device (17) configured to position and install the backrest portion (4) along the longitudinal axis (X) thereof in the dual-mode on-vehicle integrated seat (1); and a rotating fork arm device comprising at least a first fork arm (18) and a second fork arm (19) that are disposed on the backrest portion (4), and configured to fix the backrest portion (4) in place after the backrest portion (4) is rotated into position to provide the first sitting mode or the second sitting mode.

9. A vehicle, **characterized by** being equipped with the dual-mode on-vehicle integrated seat (1) according to any one of claims 1 to 7.

## Patentansprüche

1. Fahrzeugmontierter integrierter Doppelmodussitz (1), der Folgendes aufweist:
einen Sitzabschnitt (3), dazu ausgelegt, angepasst zu werden, um im Inneren eines Fahrzeugs installiert zu werden; und
einen Rückenlehnenabschnitt (4) mit einem ersten Rückenlehnenteil (5) und einem zweiten Rückenlehnenteil (6) die einander gegenüberliegen, und dazu ausgelegt, um eine Längsachse (X) davon drehbar zu sein, um einen ersten Sitzmodus bzw. einen zweiten Sitzmodus bereitzustellen, wobei im ersten Sitzmodus der Rückenlehnenabschnitt (4) so gedreht ist, dass der erste Rückenlehnenteil (5) freiliegt, um, zusammen mit dem Sitzabschnitt (3), einen Sitz zu bilden, auf dem Erwachsene sitzen können, und wobei im zweiten Sitzmodus der Rückenlehnenabschnitt (4) so gedreht ist, dass der zweite Rückenlehnenteil (6) freiliegt, um, für sich oder zusammen mit dem Sitzabschnitt (3), einen Sitz zu bilden, auf dem Kinder sitzen können;
wobei der fahrzeugmontierte integrierte Doppelmodussitz (1) ferner ein Drehumschaltsystem aufweist, das Folgendes aufweist:
eine Positionierungsvorrichtung (17), dazu ausgelegt, den Rückenlehnenabschnitt (4) entlang der Längsachse (X) davon im fahrzeugmontierten integrierten Doppelmodussitz (1) zu positionieren und zu installieren; und
eine Drehgabelarmvorrichtung, aufweisend zumindest einen ersten Gabelarm (18) und einen zweiten Gabelarm (19), die an dem Rückenlehnenabschnitt (4) angeordnet sind, und
dazu ausgelegt, den Rückenlehnenabschnitt (4) an seinem Platz zu fixieren, nachdem der Rückenlehnenabschnitt (4) in die Position gedreht ist, um den ersten Sitzmodus oder den zweiten Sitzmodus bereitzustellen.

2. Fahrzeugmontierter integrierter Doppelmodussitz (1) nach Anspruch 1, wobei der zweite Rückenlehnenteil (6) Folgendes aufweist:
einen fixierten Teil (7), fest am Rückenlehnenabschnitt (4) installiert; und
einen eingeklappten Teil (8), dessen eines Ende mit einem Ende des fixierten Teils (7) verbunden ist und mit dem fixierten Teil (7) zusammenwirkt, um eine erste Konfiguration und eine zweite Konfiguration bereitzustellen, wobei in der ersten Konfiguration der eingeklappte Teil (8) in Eingriff mit dem fixierten Teil (7) ist, um einen eingeklappten Zustand zu bilden, und wobei in der zweiten Konfiguration der eingeklappte Teil (8) vom fixierten Teil (7) gelöst ist, um einen ausgeklappten Zustand zu bilden, um den zweiten Sitzmodus bereitzustellen.

3. Fahrzeugmontierter integrierter Doppelmodussitz (1) nach Anspruch 2, wobei der zweite Rückenlehnenteil (6) ferner Folgendes aufweist:
einen Winkeleinstellteil, dazu ausgelegt, einen eingeschlossenen Winkel zwischen dem fixierten Teil (7) und dem eingeklappten Teil (8) einzustellen und diesen bei einem festgelegten Winkel zu halten, um sich an die sitzenden und schlafenden Haltungsanforderungen unterschiedlicher Kinder anzupassen;
einen Kopfstützenteil (10), installiert am fixierten Teil (7) und dazu ausgelegt, in der Höhe einstellbar zu sein, um sich an die Kopfstützenpositionsanforderungen unterschiedlicher Kinder anzupassen;
einen Abdeckungsteil (11), installiert am fixierten Teil (7) und dazu ausgelegt, in der Höhe anpassbar zu sein, um sich an Überkopfpositionsanforderungen zum Schützen unterschiedlicher Kinder anzupassen; und/oder
einen Dreipunkt-Sitzgurt (12) mit einem ersten Ende (13) und einem zweiten Ende (14), jeweils fixiert auf beiden Seiten des fixierten Teils (7), und einem dritten Ende (15), fixiert am eingeklappten Teil (8), um im fahrzeugmontierten integrierten Doppelmodussitz (1) im zweiten Modus ein Kind zurückzuhalten.

4. Fahrzeugmontierter integrierter Doppelmodussitz (1) nach Anspruch 3, wobei der eingeschlossene Winkel von 0° bis 170° reicht.

5. Fahrzeugmontierter integrierter Doppelmodussitz (1) nach Anspruch 2, wobei eine Innenseite des fixierten Teils (7) und/oder eine Innenseite des eingeklappten Teils (8) mit einem Pufferteil (16) versehen ist, der dazu ausgelegt ist, im fahrzeugmontierten integrierten Doppelmodussitz (1) im zweiten Sitzmodus die Körperteile eines Kindes zumindest teilweise zu umhüllen und zu stützen.

6. Fahrzeugmontierter integrierter Doppelmodussitz (1) nach Anspruch 2, wobei eine Gesamtdicke des eingeklappten Teils (8) und des fixierten Teils (7) im Wesentlichen 1/3 einer Gesamtdicke des Rückenlehnenabschnitts (4) ist.

7. Fahrzeugmontierter integrierter Doppelmodussitz (1) nach Anspruch 1, wobei der Rückenlehnenabschnitt (4) dazu ausgelegt ist, angepasst zu werden, um an der hintersten Sitzreihe im Inneren des Fahrzeugs installiert zu werden, sodass: zumindest ein Abschnitt des zweiten Rückenlehnenteils (6), der im ersten Sitzmodus nicht freiliegt, oder zumindest ein Abschnitt des ersten Rückenlehnenteils (5), der im zweiten Sitzmodus nicht freiliegt, in einem Gepäckraum des Fahrzeugs untergebracht ist.

8. Drehumschaltsystem für den fahrzeugmontierten integrierten Doppelmodussitz (1) nach einem der Ansprüche 1 bis 7, **dadurch gekennzeichnet, dass** er dazu ausgelegt ist, dem Rückenlehnenabschnitt (4) im fahrzeugmontierten integrierten Doppelmodussitz (1) zu ermöglichen, sich um die Längsachse (X) davon zu drehen und den fahrzeugmontierten integrierten Doppelmodussitz (1) im ersten Sitzmodus oder im zweiten Sitzmodus zu halten, wobei das Drehumschaltsystem Folgendes aufweist:
eine Positionierungsvorrichtung (17), dazu ausgelegt, den Rückenlehnenabschnitt (4) entlang der Längsachse (X) davon im fahrzeugmontierten integrierten Doppelmodussitz (1) zu positionieren und zu installieren; und
eine Drehgabelarmvorrichtung, aufweisend zumindest einen ersten Gabelarm (18) und einen zweiten Gabelarm (19), die am Rückenlehnenabschnitt (4) angeordnet, und dazu ausgelegt sind, den Rückenlehnenabschnitt (4) an seinem Platz zu fixieren, nachdem der Rückenlehnenabschnitt (4) in die Position gedreht ist, um den ersten Sitzmodus oder den zweiten Sitzmodus bereitzustellen.

9. Fahrzeug, **dadurch gekennzeichnet, dass** es mit dem fahrzeugmontierten integrierten Doppelmodussitz (1) nach einem der Ansprüche 1 bis 7 ausgestattet ist.

## Revendications

1. Siège intégré bimodal embarqué sur véhicule (1), comprenant :
une portion siège (3) configurée pour être adaptée pour être installée à l'intérieur d'un véhicule ; et
une portion dossier (4) ayant une première partie de dossier (5) et une seconde partie de dossier (6) qui sont opposées l'une à l'autre, et configurée pour être rotative autour d'un axe longitudinal (X) de celle-ci pour fournir un premier mode assis et un second mode assis respectivement, dans lequel, dans le premier mode assis, la portion dossier (4) est tournée pour que la première partie de dossier (5) soit exposée pour former, conjointement avec la portion siège (3), un siège sur lequel des adultes peuvent s'asseoir, et dans le second mode assis, la portion dossier (4) est tournée pour que la seconde partie de dossier (6) soit exposée pour former, d'elle-même ou conjointement avec la portion siège (3), un siège sur lequel des enfants peuvent s'asseoir ;
dans lequel le siège intégré bimodal embarqué sur véhicule (1) comprend en outre un système de changement rotatif comprenant :
un dispositif de positionnement (17) configuré pour positionner et installer la portion dossier (4) le long de l'axe longitudinal (X) de celle-ci dans le siège intégré bimodal embarqué sur véhicule (l) ; et
un dispositif rotatif à bras de fourche comprenant au moins un premier bras de fourche (18) et un second bras de fourche (19) qui sont disposés sur la portion dossier (4), et configuré pour fixer la portion dossier (4) en place après que la portion dossier (4) est tournée en position pour fournir le premier mode assis ou le second mode assis.

2. Siège intégré bimodal embarqué sur véhicule (1) selon la revendication 1, dans lequel la seconde partie de dossier (6) comprend :
une partie fixe (7) installée de façon fixe sur la portion dossier (4) ; et
une partie pliée (8), dont une extrémité est reliée à une extrémité de la partie fixe (7) et coopère avec la partie fixe (7) pour fournir une première configuration et une seconde configuration, dans lequel, dans la première configuration, la partie pliée (8) est en prise avec la partie fixe (7) pour former un état plié, et, dans la seconde configuration, la partie pliée (8) est séparée de la partie fixe (7) pour former un état déplié pour fournir le second mode assis.

3. Siège intégré bimodal embarqué sur véhicule (1) selon la revendication 2, dans lequel la seconde partie de dossier (6) comprend en outre :
une partie d'ajustement d'angle configurée pour ajuster un angle inclus entre la partie fixe (7) et la partie pliée (8) et le maintenir à un angle défini pour s'adapter à des besoins de posture assise ou couchée de différents enfants ;
une partie d'appuie-tête (10) installée sur la partie fixe (7) et configurée pour être ajustable en hauteur pour s'adapter à des besoins de position d'appuie-tête de différents enfants ;
une partie de couverture (11) installée sur la partie fixe (7) et configurée pour être ajustable en hauteur pour s'adapter à des besoins de position au-dessus de la tête pour protéger différents enfants ; et/ou
une ceinture de sécurité à trois points (12) ayant une première extrémité (13) et une deuxième extrémité (14) fixées sur les deux côtés de la partie fixe (7) respectivement et une troisième extrémité (15) fixée sur la partie pliée (8), afin de restreindre un enfant dans le siège intégré bimodal embarqué sur véhicule (1) dans le second mode assis.

4. Siège intégré bimodal embarqué sur véhicule (1) selon la revendication 3, dans lequel l'angle inclus varie de 0° à 170°.

5. Siège intégré bimodal embarqué sur véhicule (1) selon la revendication 2, dans lequel un côté intérieur de la partie fixe (7) et/ou un côté intérieur de la partie pliée (8) est pourvu d'une partie tampon (16), qui est configurée pour au moins partiellement envelopper et supporter les parties corporelles d'enfant dans le siège intégré bimodal embarqué sur véhicule (1) dans le second mode assis.

6. Siège intégré bimodal embarqué sur véhicule (1) selon la revendication 2, dans lequel une épaisseur totale de la partie pliée (8) et de la partie fixe (7) est sensiblement 1/3 d'une épaisseur totale de la portion dossier (4).

7. Siège intégré bimodal embarqué sur véhicule (1) selon la revendication 1, dans lequel la portion dossier (4) est configurée pour être adaptée pour être installée à la rangée arrière de sièges à l'intérieur du véhicule de telle sorte que : au moins une portion de la seconde partie de dossier (6) qui n'est pas exposée dans le premier mode assis, ou au moins une portion de la première partie de dossier (5) qui n'est pas exposée dans le second mode assis, soit logée dans un coffre du véhicule.

8. Système de changement rotatif pour le siège intégré bimodal embarqué sur véhicule (1) selon l'une quelconque des revendications 1 à 7, **caractérisé en ce qu'**il est configuré pour permettre à la portion dossier (4) dans le siège intégré bimodal embarqué sur véhicule (1) de tourner autour de l'axe longitudinal (X) de celle-ci et maintenir le siège intégré bimodal embarqué sur véhicule (1) dans le premier mode assis ou le second mode assis, ledit système de changement rotatif comprenant : un dispositif de positionnement (17) configuré pour positionner et installer la portion dossier (4) le long de l'axe longitudinal (X) de celle-ci dans le siège intégré bimodal embarqué sur véhicule (1) ; et un dispositif rotatif à bras de fourche comprenant au moins un premier bras de fourche (18) et un second bras de fourche (19) qui sont disposés sur la portion dossier (4), et configuré pour fixer la portion dossier (4) en place après que la portion dossier (4) est tournée en position pour fournir le premier mode assis ou le second mode assis.

9. Véhicule, **caractérisé en ce qu'**il est équipé du siège intégré bimodal embarqué sur véhicule (1) selon l'une quelconque des revendications 1 à 7.
